# EUROPÄISCHE PATENTANMELDUNG

(11) **EP 0 820 802 A2**
(43) Veröffentlichungstag der Anmeldung: **28.01.1998**
(21) Anmeldenummer: 97112504.2
(22) Anmeldetag: 22.07.1997
(51) Int. Cl.: B01D 53/75, F23J 15/00

(54) **Multiwäscher und Verfahren zur Totalreinigung von Gasen**

(30) Priorität: 22.07.1996 DE 19629500
(71) Anmelder: THERMOSELECT AKTIENGESELLSCHAFT, FL-9490 Vaduz (LI)
(72) Erfinder: Kiss, Günter H., 6648 Minusio (CH)
(74) Vertreter: Pfenning, Meinig & Partner

(57) **Zusammenfassung**

Die Erfindung bezieht sich auf einen Multiwäscher und ein Verfahren zur Totalreinigung von Synthesegasen aus der Vergasung von Abfällen unterschiedlichster Zusammensetzung. Derartige Multiwäscher werden zur Entfernung von klumpenden und klebrigen Inhaltsstoffen wie Kohlenstoffpartikel und Schwefel verwendet.

Gemäß der vorliegenden Erfindung wird ein horizontaler Behälter (1) durch Trennschoten (5) in mehrere Waschkammern (2,3,4) aufgeteilt, die jeweils mit einem sumpflosen Abfluß zur Pumpenvorlage (6,7,8) versehen sind. In jeder der Kammern wird mindestens ein Stoffaustauscher (9) in schräger Lage angeordnet und von beiden Seiten mit unterschiedlicher Menge von Waschflüssigkeit besprüht, die in den Stoffaustauscher eindringt und aufgrund der unterschiedlichen Menge gerichtet ausgetragen wird. Da die Waschflüssigkeit auch die Behälterwandung besprüht, ist eine vollständige Selbstreinigung des Multiwäschers gewährleistet. Zur Verhinderung jeglichen Übertritts von Waschflüssigkeit aus einer Waschkammer in die nachfolgende Waschkammer befindet sich am - in Gasströmrichtung gesehen - hinteren Ende jeder Waschkammer ein Tröpfchenabscheider (10).

## Beschreibung

Die Erfindung bezieht sich auf einen Multiwäscher und ein Verfahren zur Totalreinigung von Gasen nach den Oberbegriffen der Ansprüche 1 und 5. Derartige Multiwäscher werden zur Entfernung von Schadstoffen in Gasen und zur Aufreinigung insbesondere von Synthesegasen oder Abgasen verwendet.

Nach dem Stand der Technik wird zur Reinigung von kontaminierten Industriegasen aller Art aber auch zur Qualitätsverbesserung von Nutzgasen das zu reinigende Gas durch mehrere horizontal gelagerte Stoffaustauscher geleitet, die mit einer Waschflüssigkeit versetzt sind. Diese Wäscher haben die Aufgabe, die Gasinhaltstoffe, wie beispielsweise CO₂, CO, NOₓ, H₂S oder auch feste Verunreinigungen wie Stäube aus dem Gasstrom mit der Waschflüssigkeit auszutragen. Es sind eine Vielzahl von Waschflüssigkeiten bekannt, die in der Regel nur einen bestimmten Schadstoff physikalisch und/oder chemisch binden, gegebenenfalls absorbiert oder adsorbiert.

Die JP 55-22238 zeigt eine derartige Vorrichtung zur Reinigung von Gasen, bei der innerhalb eines im wesentlichen horizontal liegenden Behälters mehrere Waschbereiche angeordnet sind, durch die das zu reinigende Gas auf und ab mäandrierend geführt wird. Die einzelnen Waschbereiche weisen dabei in einem gewissen Abstand horizontal übereinander geschichtete Stoffaustauscher als Waschböden aus Packungen mit Füllkörpern auf, die einseitig auf ihrer obenliegenden Außenseite mit Waschflüssigkeit besprüht werden. Es handelt sich also um in einem einzigen Druckgehäuse zusammengefaßte, in horizontaler Reihung angeordnete vertikal durchströmte Wäschertürme, wie sie als einzelne Wäschertürme üblich sind.

Diese bekannten Kolonnenwaschanlagen haben zur Reinigung von Synthesegasen aus der Abfallvergasung eine Reihe von Nachteilen. Aufgrund der horizontalen Schichtung der einzelnen Stoffaustauscher läuft die von den Stoffaustauschern ablaufende stoffbeladene Reinigungsflüssigkeit in die darunterliegenden weiteren Waschböden. Insbesondere bei klumpenden und klebrigen Inhaltsstoffen wie Kohlenstoffpartikel und Schwefel führt dies innerhalb kurzer Zeit zu einem Zusetzen und Verstopfen der Waschböden.

Aufgrund dieser Nachteile werden Wäscher eingesetzt, die auf die genannten Stoffaustauscher verzichten und stattdessen das zu reinigende Gas lediglich durch einen Sprühnebel der Reinigungsflüssigkeit blasen, sogenannte Spraywäsche. Nachteilig ist an diesen Wäschern, daß die Kontaktoberfläche zwischen Gas und Flüssigkeit verglichen mit den Stoffaustauschern gering ist und daher eine verringerte Reinigungswirkung erzielt wird. Die EP 0 249 400 A1 zeigt einen derartigen Wäscher, bei dem ein horizontal liegender Druckbehälter in einzelne Zonen eingeteilt ist. In diesen Zonen wird ein Sprühnebel aus Reinigungsflüssigkeit erzeugt, durch den das Gas geleitet wird. Der Sprühnebel wird dann an geneigt stehenden Tropfenabscheidern niedergeschlagen und in einem gemeinsamen Sumpf gesammelt, der durch Sedimentation von klumpenden und klebrigen Inhaltsstoffen ebenfalls zum Zusetzen neigt.

Aufgabe der vorliegenden Erfindung ist es, einen Multiwäscher und ein Verfahren zur Totalreinigung von Synthesegas aus der Vergasung von Abfällen zur Verfügung zu stellen, mit dem mit Hilfe von Stoffaustauschern auf kleinem Raum eine hohe Reinigungsleistung erzielt wird, wobei der Multiwäscher bzw. das Verfahren durch Selbstreinigung wartungsfreundlich und für Verstopfungen unempfindlich ist.

Diese Aufgabe wird durch den Multiwäscher nach dem Oberbegriff des Anspruches 1 sowie durch das Verfahren nach dem Oberbegriff des Anspruches 5 in Verbindung mit ihren kennzeichnenden Merkmalen gelöst.

Gegenüber der Verwendung eines reinen Sprühsystems zeichnen sich Wäscher mit einem Stoffaustauscher durch eine vergrößerte Kontaktfläche zwischen zu reinigendem Gas und der Waschflüssigkeit und daher durch eine erheblich bessere Reinigungswirkung aus.

Die Nachteile dieser Wäscher mit Stoffaustauschern wird nach der vorliegenden Erfindung durch die Schrägstellung der Stoffaustauscher bzw. Waschböden beseitigt, da die stoffbeladene Reinigungsflüssigkeit nach unten in die sumpflosen Waschkammern abgeleitet wird, ohne daß sie mit einem weiteren Waschboden in Berührung kommt. Vielmehr läuft die Reinigungsflüssigkeit an der geneigten Oberfläche der Waschböden ab bzw. tropft von dieser direkt auf den Boden der sumpflosen Waschkammer, der durch die Besprühung mit Waschflüssigkeit permanent gereinigt wird.

Durch diese Anordnung der Stoffaustauscher wird es weiterhin möglich, die unbelastete Reinigungsflüssigkeit von beiden Seiten auf die Stoffaustauscher aufzusprühen. Diese dringt hierdurch von beiden Seiten in die Stoffaustauscher ein und läuft nach Beladung mit den zu entfernenden Gasbestandteilen nach außen ab. Durch die unterschiedliche Menge, mit der die Reinigungsflüssigkeit auf die beiden Seiten der Stoffaustauscher gesprüht und in diese eingetragen wird, wird ein gerichteter Austrag der Waschflüssigkeit aus den Stoffaustauschern erzielt. Dadurch wird die Verstopfung der Stoffaustauscher verhindert und ein Selbstreinigungseffekt erreicht.

Weitere vorteilhafte Weiterbildungen des erfindungsgemäßen Multiwäschers und des erfindungsgemäßen Verfahrens werden in den abhängigen Ansprüchen gegeben.

Die Zufuhr der verschiedenen Reinigungsflüssigkeiten zu den einzelnen Waschkammern erfolgt vorteilhafterweise über ein in der Mitte des Behälters verlaufendes Rohr, das radial durch sich in Längsrichtung erstreckende Zwischenwände in einzelne konzentrische Zonen eingeteilt ist, die jeweils eine Reinigungsflüssigkeit aufnehmen und zu einer der Waschkammern leiten.

Der Wäscher kann auf der Gasauslaßseite mit einer Waschkammer versehen sein, die zur Kondensation von mit Schadstoffen beladenem Wasserdampf dient.

Im folgenden werden vorteilhafte Ausführungsbeispiele eines erfindungsgemäßen Multiwäschers beschrieben.

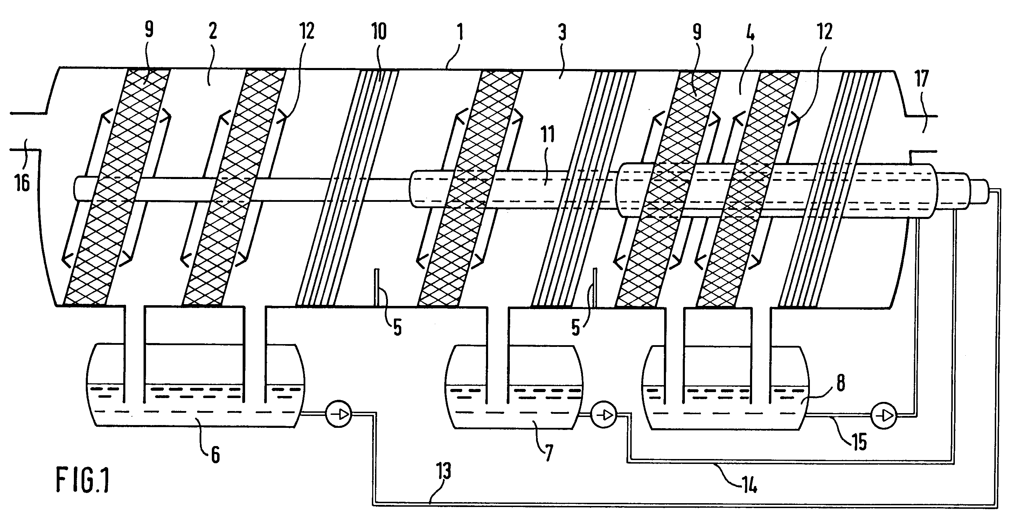

Fig. 1 zeigt einen erfindungsgemäßen Multiwäscher.

Der erfindungsgemäße Multiwäscher besteht aus einem horizontalen Behälter 1 mit einem an seinem einen Ende angeordneten Gaseinlaß 16 und einem an dem anderen Ende angeordneten Gasauslaß 17. Der Behälter 1 ist in drei separate Waschkammern 2, 3 und 4 durch Standschoten 5 unterteilt. Jeder dieser sumpflosen Waschkammern ist ein direkter Ablauf zur Pumpenvorlage 6, 7 bzw. 8 zugeordnet.

In jeder der Waschkammern 2, 3 bzw. 4 sind Waschböden als Stoffaustauscher unter einem vorbestimmten Winkel gegen die Längsachse des Behälters 1 schräg gestellt angeordnet. Diese Stoffaustauscher sind als Füllkörperschüttungen ausgeführt und werden über Düsen 12 jeweils von beiden Seiten mit einer Waschflüssigkeit besprüht, die dabei in die Stoffaustauscher eindringt. Dabei erfolgt das Besprühen für jede Seite des Stoffaustauschers mit einer eigenen, von der jeweils anderen Seite des Stoffaustauschers verschiedenen Menge.

Der Abstand der Stoffaustauscher ist in Abhängigkeit von ihrem Anstellwinkel so gewählt, daß abtropfende Waschflüssigkeit unmittelbar auf den Boden der Waschkammer und nicht auf weitere Stoffaustauscher fällt.

Die Sprühdüsen 12 werden von einem Rohr 11 mit Waschflüssigkeit versorgt, das in der Mittelachse des Behälters 1 angeordnet ist und durch konzentrisch verlaufende Zwischenwände in einzelne abgeschlossene Flüssigkeitsleitungen unterteilt ist. Hierdurch kann jede einzelne Waschkammer mit einer eigenen Waschflüssigkeit mit einer eigenen Temperatur oder einem eigenen Druck versorgt werden. Das Rohr 11 ist auf seinem außerhalb des Behälters liegenden Ende über Rücklaufleitungen 13, 14 und 15 mit den Pumpvorlagen 6, 7 und 8 verbunden, so daß die Waschflüssigkeiten im Kreislauf geführt werden.

Um zusätzlich jeden Übertritt von Waschflüssigkeit von einer Waschkammer in die nachfolgende Waschkammer zu verhindern, befindet sich am Ende jeder Waschkammer ein ebenfalls schräggestellter Tropfenfänger 10. Dieser Tropfenfänger 10 filtert aus dem durchgeleiteten Gas die als Tröpfchen oder Nebel mitgeführte Waschflüssigkeit, die dann anschließend entlang des Tropfenfängers auf den Boden der Waschkammer und in die zugehörige Pumpenvorlage abläuft.

Bei dem Multiwäscher in diesem Ausführungsbeispiel werden in der ersten Waschkammer 2 mit Hilfe von Glyzerin in der Waschflüssigkeit Kohlenstoffpartikel entfernt und in der zweiten Waschkammer 3 mit einer SULFEROX-Waschflüssigkeit H₂S in elementaren Schwefel umgewandelt, der dann anschließend mit der Waschflüssigkeit aus der Waschkammer abläuft.

In einem weiteren Ausführungsbeispiel schließt sich ab letzter Stufe des Multiwäschers eine weitere Kammer an, die der Kondensation und damit der Entfernung von Schadstoff beladenem Wasserdampf aus dem zu reinigenden Gas dient.

## Patentansprüche

1. Multiwäscher zur Reinigung von Syntheserohgas aus der Vergasung von kommunalen und anderen Abfällen, die Kohlenstoffpartikel, Schwefelwasserstoff, Wasserdampf und flüchtige Schwermetalle enthalten, mit einem horizontal gelagerten Behälter (1), der entlang seiner Längsachse von dem zu reinigenden Gas durchströmt wird und der eine Mehrzahl von durch Standschoten (5) getrennten, entlang der Längsachse des Behälters (1) hintereinander angeordneten Waschkammern (2,3,4) aufweist, in denen das zu reinigende Gas Waschprozessen mit unterschiedlichen Waschflüssigkeiten bei gegebenenfalls unterschiedlichen Temperaturen unterzogen wird,
**dadurch gekennzeichnet,**
daß jeder Waschkammer (2,3,4) eine eigene außerhalb der Waschkammer gelegene Pumpenvorlage (6,7,8) zugeordnet ist und daß in jeder Waschkammer (2,3,4) mindestens ein Stoffaustauscher (9) unter einem jeweils vorbestimmten Winkel zur Längsachse des Behälters (1) geneigt angeordnet ist, wobei die Stoffaustauscher (9) von beiden Seiten mit einer unterschiedlichen Menge mit Waschflüssigkeit besprüht werden, so daß die Waschflüssigkeit in den Stoffaustauscher (9) eindringt und sich ein gerichteter Austrag der Waschflüssigkeit ergibt.

2. Multiwäscher nach Anspruch 1,
dadurch gekennzeichnet, daß in der Mittelachse des Behälters (1) ein radial in Zonen eingeteiltes Rohr (11) zur Versorgung der einzelnen Waschkammern (2,3,4) mit Waschflüssigkeit angeordnet ist.

3. Multiwäscher nach mindestens einem der vorhergehenden Ansprüche,
dadurch gekennzeichnet, daß in den Waschkammern (2,3,4) in Strömungsrichtung des Gases hinter den Stoffaustauschern (9) je mindestens ein Tropfenabscheider (10) unter einem jeweils vorbestimmten Winkel zur Längsachse des Behälters (1) geneigt angeordnet ist.

4. Multiwäscher nach mindestens einer der vorhergehenden Ansprüche,
dadurch gekennzeichnet, daß der Behälter (1) in Strömungsrichtung des Gases hinter den Waschkammern (2,3,4) eine weitere Kammer aufweist, die zur Kondensation des mit Schadstoffen beladenen Wasserdampfes dient.

5. Verfahren zur Totalreinigung von Synthesegas aus der Vergasung von kommunalen und anderen Abfällen, von Kohlenstoffpartikeln, Schwefelwasserstoff, Wasserdampf und flüchtigen Schwermetallen, wobei das Gas einen horizontal angeordneten Behälter (1) entlang seiner Längsachse durchströmt und eine Mehrzahl von Waschprozessen in einzelnen durch Standschoten (5) getrennten, entlang der Längsachse des Behälters (1) hintereinander angeordneten Waschkammern durchläuft,
**dadurch gekennzeichnet,**
daß das Gas durch gegen die Längsachse des Behälters (1) geneigte und mit einer unterschiedlichen Menge von beiden Seiten mit Waschflüssigkeit besprühte Stoffaustauscher (9) sowie durch die Sprühnebel der Spraydüsen geblasen wird, und
daß die von den Stoffaustauschern abtropfende Waschflüssigkeit in jeder Waschkammer (2,3,4) separat aufgefangen und direkt abgeleitet wird, so daß die nachfolgenden Waschstufen durch die bereits beladene Waschflüssigkeit nicht belastet werden.

6. Verfahren nach Anspruch 5,
dadurch gekennzeichnet, daß der Sprühnebel und die von den Stoffaustauschern abtropfende Waschflüssigkeit vor dem Übertritt in die nachfolgende Waschkammer durch einen Tropfenabscheider (10) aus dem Gasstrom abgeschieden und der Waschflüssigkeit zugeführt wird.

7. Verfahren nach mindestens einem der Ansprüche 5 oder 6,
dadurch gekennzeichnet, daß die Waschflüssigkeit über ein in der Mittelachse des Behälters angeordnetes radial in Zonen eingeteiltes Rohr (11) den einzelnen Waschkammern (2,3,4) zugeführt wird.
